Europäisches Patentamt

European Patent Office

Office européen des brevets

(11) Publication number: **0 214 604 B1**

# EUROPEAN PATENT SPECIFICATION

(45) Date of publication of patent specification: **02.12.92**

(51) Int. Cl.⁵: **G11B 23/04**, C08K 3/26, C08K 3/30, C08L 23/02

(21) Application number: **86112135.8**

(22) Date of filing: **02.09.86**

(54) **Tape cartridge.**

(30) Priority: **04.09.85 JP 195174/85**

(43) Date of publication of application:
**18.03.87 Bulletin 87/12**

(45) Publication of the grant of the patent:
**02.12.92 Bulletin 92/49**

(84) Designated Contracting States:
**DE FR GB**

(56) References cited:
**EP-A- 0 019 926       EP-A- 0 074 033
EP-A- 0 170 772       DE-A- 2 119 713
FR-A- 2 391 529       GB-A- 2 025 898
GB-A- 2 074 130**

**PATENT ABSTRACTS OF JAPAN, vol. 8, no. 245 (P-312)[1682], 10th November 1984; & JP-A-59 117 768**

**PATENT ABSTRACTS OF JAPAN, vol. 7, no. 249 (P-234)[1394], 5th November 1983; & JP-A-58 133 676**

(73) Proprietor: **Hitachi Maxell Ltd.
No 1-1-88, Ushitora Ibaraki-shi
Osaka-fu(JP)**

(72) Inventor: **Sasaki, Sigeo
4-6-403, Oharano-nishisakaidani-machi
2-chome
Nishigyo-ku Kyoto-shi Kyoto-fu(JP)**

(74) Representative: **von Kreisler, Alek,
Dipl.-Chem. et al
Deichmannhaus am Hauptbahnhof
W-5000 Köln 1(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a tape cartridge, more particularly, to a tape cartridge enabling to reduce a modulation noise occurred during recording and playing back.

The modulation noise is a problem in various sorts of magnetic tape cartridges, and the modulation noise occurs by a miscontact between a running tape and a magnetic head and an outside oscillation applied from a device arranged outside of the magnetic tape cartridge to the running tape and the magnetic head. Conventionally, the modulation noise occurred by the miscontact has been studied, and the modulation noise can be suppressed by improving the magnetic tape cartridge.

Patent Abstracts of Japan, Vol. 8, No. 245 (P-312) [1682], 10th November 1984, concerning the JP-A-59-117768 describes a tape cartridge comprising a cartridge case made of a complex material (styrene resin such as Hi-PS resin, Gp-PS resin, AS resin, ABS resin or the like) mixed with a filler of 40-80 % by weight of said plastic material made of $ZnO$, $BaSO_4$, $PbSO_4$ or the like. This is reflected in the preamble of the patent claim.

DE-A-21 19 713 discloses a thermoplastic resin, in particular a specific polyethylene containing inorganic fillers. The acoustic absorptive properties of a high density polyethylene containing calcium sulfite and a blowing agent are denoted as excellent.

An essential object of the present invention is to suppress the modulation noise occurred by the outside oscillation. For example, the oscillation of a motor arranged in a tape recorder is transferred through the case of the tape recorder into a cartridge case, resulting in that the transferred oscillation leads to the oscillation of the running tape with a slight width, and a modulation noise is overlapped to a signal to be recorded and played back. The reduction of the modulation noise occurred by the outside oscillation has not been paid attention, however, in general, the modulation noise has been prevented by supporting the oscillation source, such as the motor etc., by a member for preventing the oscillation, and preventing the oscillation from transferring to the cartridge case.

The reduction of the modulation noise can be certainly suppressed by the aforementioned prevention method of the tape recorder, however, it is not enough to reduce the modulation noise, and another prevention method for reducing the modulation noise should be applied to the magnetic tape cartridge itself.

In general, the attenuation of the mechanical oscillation varies depend upon the materials of the oscillation source, the transferring member, and the tape cartridge. The outside oscillation leading to the modulation noise is transferred through the tape cartridge to the tape arranged in the tape cartridge.

An essential object of the present invention is to provide a tape cartridge with the same softness and hardness as those of the conventional tape cartridge which can suppress a modulation noise occurred by an outside oscillation.

According to the present invention, there is provided a tape cartridge as defined in the claim.

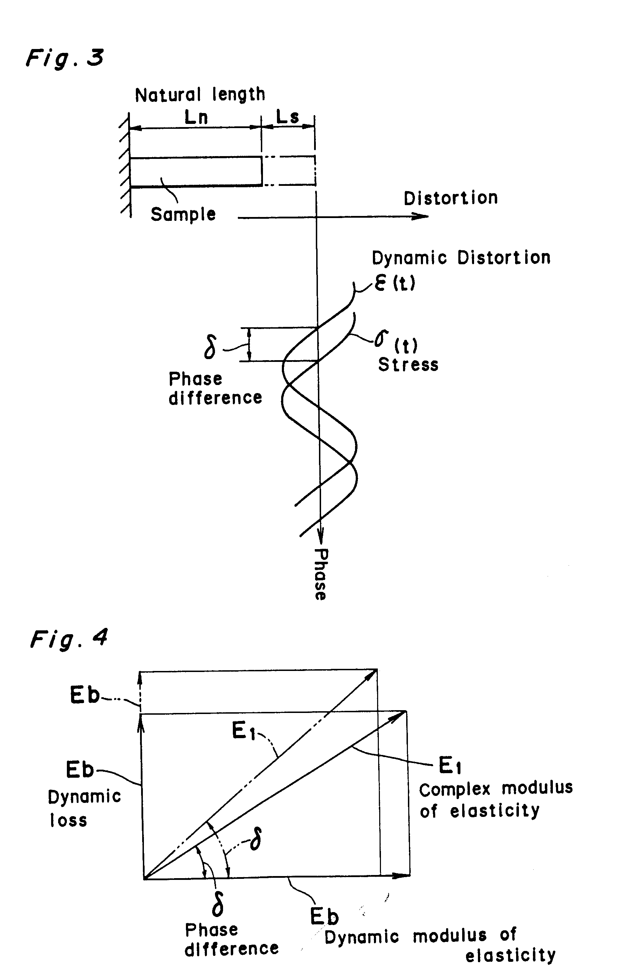

Accordingly, said plastic material resin leads to a more phase difference between a dynamic distortion and a stress occurred when the stress is applied to the tape cartridge case, and said filler leads to the almost same complex modulus of elasticity as the complex modulus of elasticity of a conventional cartridge case, resulting in that a larger slope of the complex modulus E1 of elasticity leads to a larger dynamic loss Eb, as shown in a chain line of Fig. 4. Therefore, the tape cartridge according to the present invention can prevent a running tape arranged in the tape cartridge from oscillating because an outside oscillation is attenuated in the tape cartridge, and also the tape cartridge can reduce a modulation noise generated by the outside oscillation.

Fig. 1 is a graph of a frequency characteristic of a modulation noise of a conventional magnetic tape cartridge and a magnetic tape cartridge of an embodiment according to the present invention,

Fig. 2 is a graph of an oscillation frequency characteristic of a dynamic loss of the magnetic tape cartridges of the embodiment, a comparative example, and the conventional example,

Fig. 3 is a view for explaining the principle aspect of a test method of the modulation noise, and

Fig. 4 is a vector diagram showing a relation between a complex modulus of elasticity and a dynamic loss.

According to the present invention, a cartridge case is made of a material of a complex plastic material mixed with a filler. In order to reduce an outside oscillation of the magnetic tape cartridge occurred by transferring from a motor etc. arranged in a tape recorder to a magnetic tape cartridge, the complex plastic material is made of a mixture of a plastic base made of polypropylene, and a filler of 45 percent to 65 percent by weight of the plastic base in the shape of a particle, being made of calcium carbonate or barium sulfate. The cartridge case of the embodiment can have a dynamic loss more than $1 \times 10^8$ N/m$^2$ ($1 \times 10^9$ dyne/cm$^2$) within the range of oscillation frequency of 0.1 Hz to 1000 Hz.

The reason why the mixture rate of the filler is in the range of 45 percent to 65 percent by weight of the plastic base is as follows. That is, in case the mixture rate is less than 45 percent, the cartridge case may be often broken, on the other hand, in case the mixture rate is more than 65 percent, the plastic material may not be filled in a mold satisfactorily when the plastic material is formed in a shape because of the less fluidity of the plastic material, resulting in that the problems occur in the manufacturing process and the manufacturing technique.

Furthermore, at the range of the oscillation frequency more than 3000 Hz, it is known that there is no the attenuation effect of the modulation noise depend upon the difference of the elastic materials. The oscillating members such as a motor etc. arranged in a tape recorder often oscillate at an oscillation frequency less than 1000 Hz.

The plastic material is not harder than styrene and polyethylene which are conventional and general case forming materials, therefore, when a periodic and dynamic distortion occurs by the aforementioned outside oscillation $\epsilon$ (t), there is a phase difference $\delta$ between the dynamic distortion $\epsilon$ (t) and the response of the stress $\sigma$ (t), as shown in Fig. 3, wherein a larger dynamic distortion occurs, a larger phase difference there is. The plastic material mixed with the filler has the same hardness as the conventional case forming material, and has a larger modulus of elasticity than the plastic material base mixed with no filler. Thus, the magnetic tape cartridge made of the plastic material mixed with the filler has both of a proper softness and a proper hardness, resulting in that the outside oscillation can be effectively attenuated and the modulation noise can be reduced.

When a stress $\sigma$ (t) is applied to the cartridge case varying periodically, a dynamic distortion $\epsilon$ (t) occurs in the cartridge case in response therewith, wherein the complex modulus E1 of elasticity is composed of a dynamic modulus Ea of elasticity and a dynamic loss Eb, and the complex modulus E1 of elasticity is presented by the following equation.

$$E1 = \sigma \text{ (t) } / \epsilon \text{ (t) } = Ea + Eb \qquad (1)$$

Moreover, the relation between the complex modulus E1 of elasticity, the dynamic modulus Ea of elasticity, and the dynamic loss Eb is drawn as shown in Fig. 4. The dynamic loss Eb is presented by the following equation.

$$Eb = | E1 | \sin \sigma \qquad (2)$$

When the dynamic loss Eb is larger, the outside oscillation can be reduced effectively, therefore, when the complex modulus E1 of elasticity and the phase difference $\delta$ are larger, the attenuation rate of the cartridge case can be improved.

The test method and the test result will be described below in details.

## Embodiment according to the present invention

A filler in the shape of a particle made of calcium carbonate was mixed at a rate of 55 percent by weight of a plastic base into the plastic base made of polypropylene, then the plastic base mixed with the filler was formed in the shape of a magnetic tape cartridge for recording and playing back an audio signal by an injection forming device.

## Comparative example

In order to compare the embodiment described above, a filler in the shape of a particle made of aforementioned calcium carbonate was mixed at a rate of 20 percent by weight of a plastic base into the plastic base made of styrene resin, then the plastic base mixed with the filler was formed in the shape of a magnetic tape cartridge in a similar manner to the aforementioned manner.

## Conventional example

A plastic base made of only styrene resin was formed in the shape of magnetic tape cartridge in a similar manner to the aforementioned manner.

## Test method

The aforementioned cartridge cases of the embodiment, the comparative example, and the conventional example were tested as follows.

First of all, as shown in Fig. 3, the end portion of the sample was fixed and an stress was applied to the samples so as to occur an initial distortion Ls, then another stress was applied to the samples so as to occur an oscillation distortion with a sine curve having a center of an initial distortion Ls, the stress and the oscillation distortion occurred by the above applied stress were measured. After that, the complex modulus E1 of elasticity, the dynamic loss Eb, and the dynamic modulus Ea of elasticity were calculated by a computer using the measured values. The above process was performed varying the oscillation frequency in the range of 0.1 Hz to 1000 Hz.

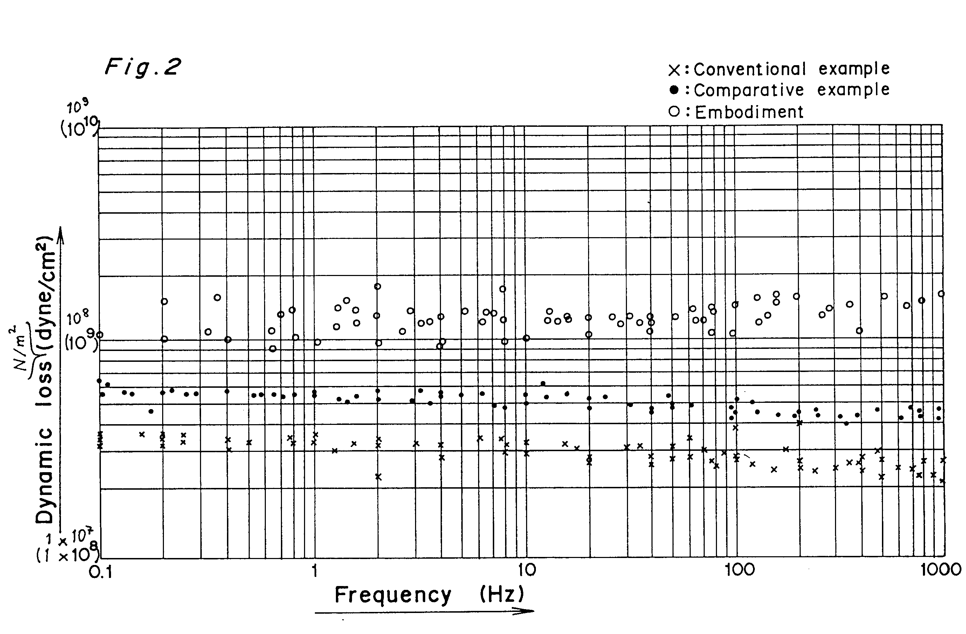

Fig. 2 shows a graph plotted by the calculation result obtained by the aforementioned process. In the frequency characteristic of Fig. 2, the axis of abscissa is indicated by the oscillation frequency (Hz), and the axis of ordinates is indicated by the dynamic loss Eb $N/m^2$ ($dyne/cm^2$). In each of the plotted data, o designates the data of the embodiment according to the present invention, • designates the data of the comparative example, and × designates the data of the conventional example.

The following things is apparent from the frequency characteristic of Fig. 2. That is, the data of the dynamic loss Eb of the conventional example have a center value of $3 \times 10^7$ N/m$^2$ ($3 \times 10^8$ dyne/cm$^2$), and a decreasing characteristic as the oscillation frequency increases or decreases from the oscillation frequency of the center value of the dynamic loss Eb. The data of the dynamic loss Eb of the comparative example have also a center value of $5 \times 10^7$ N/m$^2$ ($5 \times 10^8$ dyne/cm$^2$), and a decreasing characteristic as the oscillation frequency increases or decreases from the oscillation frequency of the center value of the dynamic loss Eb. On the other hand, the data of the dynamic loss Eb of the embodiment according to the present are in the range of $10^8$ to $2 \times 10^8$ N/m$^2$ ($10^9$ to $2 \times 10^9$ dyne/cm$^2$), and have a center value of approximately $1.3 \times 10^8$ N/m$^2$ ($1.3 \times 10^9$ dyne/cm$^2$). As this result, the embodiment has a dynamic loss Eb which is more than four times as large as the dynamic loss Eb of the conventional example, and also which is more than two and half times as large as the dynamic loss Eb of the comparative example. This means the outside oscillation can be attenuated effectively by the embodiment according to the present invention.

Furthermore, the specific gravities of each of the samples of the conventional example, the comparative example, and the embodiment were 1.04, 1.2, and 1.4, respectively. Moreover, the cartridge cases of the plastic base made of polypropylene mixed with the filler of a mixture rate in the range of 45 percent to 65 percent by weight were tested by the aforementioned testing method, and similar results of the dynamic loss of each of the samples were obtained.

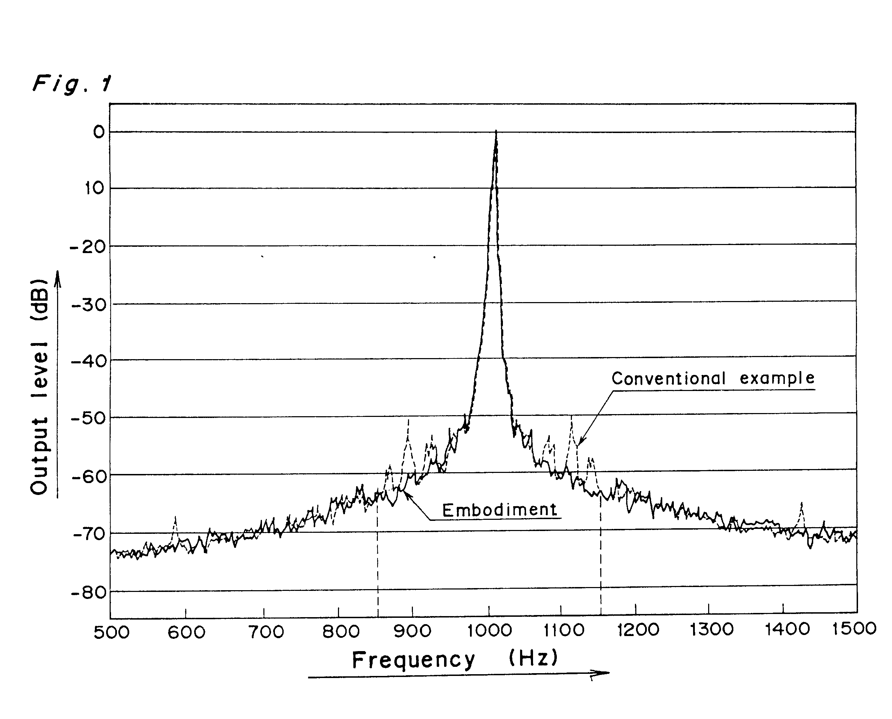

Next, the acoustic characteristics of the embodiment and the conventional example were measured in order to confirm the effect of the dynamic loss Eb affected into the modulation noise. Fig. 1 shows frequency characteristics of the modulation noise level of the both of the embodiment according to the present invention and the conventional example. In Fig. 1, a real line designates the frequency characteristic of the modulation noise level of the embodiment according to the present invention, and a dotted line designates the frequency characteristic of the modulation noise level of the conventional example. It is apparent from the frequency characteristics of Fig. 1, that the modulation noise level of the embodiment is in the range of 5 dB to 10 dB less than the modulation noise level of the conventional example within the frequency range of 850 Hz to 1150 Hz.

Other embodiments

In the aforementioned embodiment, the filler made of calcium carbonate in the shape of a particle was mixed into the plastic base, however, as the alternative, the filler made of barium sulfate in the shape of a particle, whose characteristics is similar to those of the filler made of calcium carbonate, may be used. The filler made of silicon or glass is not suitable for the filler of the magnetic tape cartridge, because the injection forming device is abrased by the filler made of the silicon or glass.

Furthermore, the magnetic tape cartridge according to the present invention can be applied for not only audio tape cartridge but also the other sorts of the tape cartridges.

**Claims**

1. A tape cartridge comprising a cartridge case made of a plastic material including a filler of particles made of e.g. barium sulfate

   characterized in that

   said complex plastic material is polypropylene including a filler of 45 to 65 percent calcium carbonate and/or said barium sulfate by weight of said plastic material, so that said tape cartridge having a dynamic loss of more than $1 \times 10^4$ N/cm$^2$ ($1 \times 10^9$ dyne/cm$^2$) within the range of an oscillation frequency of 0.1 Hz to 1000 Hz.

**Patentansprüche**

1. Bandkassette, umfassend ein Kassettengehäuse, das aus einem Kunststoff-Material hergestellt ist, das einen Füllstoff aus Teilchen, z.B. solchen aus Bariumsulfat, enthält,
   dadurch gekennzeichnet, daß das komplexe Kunststoff-Material Polypropylen ist, das einen Füllstoff aus 45 bis 65 Gew.-% Calciumcarbonat und/oder dem genannten Bariumsulfat, bezogen auf das Gewicht des Kunststoff-Materials, enthält, so daß die Bandkassette im Bereich der Schwingungsfrequenzen von 0,1 Hz bis 1000 Hz einen dynamischen Verlust von mehr als $1 \times 10^4$ N/cm$^2$ ($1 \times 10^9$ dyn/cm$^2$) hat.

**Revendications**

1. Cassette de bande comprenant un boîtier de cassette formé d'une matière plastique contenant une charge de particules constituée par exemple par du sulfate de baryum,
   caractérisée en ce que :

la matière plastique complexe est du polypropylène contenant une charge de 45 à 65 % en poids de carbonate de calcium et/ou de sulfate de baryum, par rapport au poids de la matière plastique, si bien que la cassette de bande a une perte dynamique supérieure à $1.10^4$ N/cm$^2$ ($1.10^9$ dyne/cm$^2$) dans la plage de fréquences d'oscillation comprise entre 0,1 et 1 000 Hz.

Fig.1

Fig.2

Dynamic loss (dyne/cm²) $N/m^2$

$1 \times 10^7$ ($1 \times 10^6$) 0.1

$10^8$ ($10^9$)

$10^9$ ($10^{10}$)

Frequency (Hz)

1

10

100

1000

×：Conventional example

●：Comparative example

O：Embodiment

## Fig. 3

Natural length

$L_n$ | $L_s$

Sample

Distortion

Dynamic Distortion
$\varepsilon(t)$

$\delta$

$\sigma(t)$
Stress

Phase
difference

Phase

## Fig. 4

$E_b$

$E_b$
Dynamic
loss

$E_1$

$E_1$
Complex modulus
of elasticity

$\delta$

$\delta$
Phase
difference

$E_b$
Dynamic modulus of
elasticity